Europäisches Patentamt

European Patent Office

Office européen des brevets

(19)

(11) **EP 0 796 748 B1**

(12) **FASCICULE DE BREVET EUROPEEN**

(45) Date de publication et mention
de la délivrance du brevet:
**20.11.2002   Bulletin 2002/47**

(51) Int Cl.7: **B60C 23/04**

(21) Numéro de dépôt: **97104500.0**

(22) Date de dépôt: **17.03.1997**

(54) **Procédé d'exploitation des mesures de pression dans un système de surveillance de la pression de pneumatique**

Verfahren zur Auswertung von Druckmessung in einer Reifendruck-Überwachungseinrichtung

Method for processing pressure measurements in a tyre monitoring system

(84) Etats contractants désignés:
**DE FR GB IT**

(30) Priorité: **20.03.1996   FR 9603568**
**22.03.1996   FR 9603708**

(43) Date de publication de la demande:
**24.09.1997   Bulletin 1997/39**

(73) Titulaire: **COMPAGNIE GENERALE DES ETABLISSEMENTS MICHELIN-MICHELIN & CIE F-63040 Clermont-Ferrand Cédex 01 (FR)**

(72) Inventeurs:
• **Chamussy, Jean-François**
**41000 Blois (FR)**
• **Francois, Jean-Pierre**
**63540 Romagnat (FR)**
• **Meunier, André**
**63370 Lempdes (FR)**

(74) Mandataire: **Dequire, Philippe Jean-Marie Denis**
**Michelin & Cie,**
**Service SGD/LG/PI-LAD**
**63040 Clermont Ferrand Cedex 9 (FR)**

(56) Documents cités:
**EP-A- 0 315 885          FR-A- 2 680 136**

**Description**

La présente invention se rapporte aux systèmes de surveillance des pneumatiques. Plus particulièrement, elle concerne l'utilisation de tels systèmes pour détecter des situations où, bien que toutes les pressions de gonflage soient dans les fourchettes autorisées, il existe un risque potentiel d'anomalie.

Les systèmes de surveillance devraient avoir pour objet de garantir que l'ensemble des pneumatiques d'un véhicule est utilisé dans les conditions d'utilisation pour lesquelles ces pneumatiques ont été conçus.

De fait, ces systèmes vérifient classiquement que la pression de gonflage de chacun des pneumatiques d'un véhicule ne diminue pas en dessous d'une valeur seuil située à environ 10 à 15 % en dessous de la pression nominale de gonflage à froid.

Le document FR2680136 décrit un procédé d'exploitation des signaux dans un système de surveillance des pneumatiques d'un véhicule, ledit système délivrant pour chaque pneumatique au moins une mesure de la pression de gonflage dudit pneumatique, dans lequel, après avoir vérifié l'état froid des pneumatiques, pour chaque pneumatique, on mesure la pression de gonflage et on calcule l'écart entre la pression de gonflage mesurée et la pression nominale et on déclenche une alarme lorsque l'écart est supérieur à un seuil donné.

Ce contrôle ne garantit cependant pas la détection de certaines anomalies d'état de gonflage des pneumatiques d'un véhicule.

Un exemple de situation anormale est lorsqu'un pneumatique est manifestement sous-gonflé par rapport à l'ensemble des autres. Cela peut être dû à une fuite très lente non encore détectée ou au résultat d'une intervention sur ce pneumatique non suivie d'un regonflage correct.

L'invention a pour objet un procédé d'exploitation des signaux d'un système de surveillance des pneumatiques des véhicules qui permet de détecter un pneumatique dont l'état de gonflage s'écarte sensiblement de celui de l'ensemble des autres pneumatiques du véhicule sans entraîner de nombreuses fausses alarmes.

Le procédé selon l'invention est tel que, après avoir vérifié l'état froid des pneumatiques :

- pour chaque pneumatique, on mesure la pression de gonflage et on calcule l'écart entre la pression de gonflage mesurée et la pression nominale ;
- on identifie le pneumatique du véhicule dont ledit écart a la valeur algébrique la plus petite et on appelle ce pneumatique « le pneumatique le plus sous-gonflé » ;
- pour tous les pneumatiques du véhicule, à l'exception du pneumatique le plus sous-gonflé, on calcule une grandeur caractéristique de la dispersion desdits écarts entre les pressions de gonflage mesurées et les pressions nominales et on compare cette grandeur caractéristique relativement à un premier seuil donné ;
- si la grandeur caractéristique de la dispersion desdits écarts est inférieure au premier seuil, on calcule, pour le pneumatique le plus sous-gonflé, la différence entre ledit écart entre la pression de gonflage mesurée et la pression nominale dudit pneumatique et la moyenne desdits écarts des autres pneumatiques, et on compare ladite différence relativement à un second seuil donné ;
- si ladite différence est supérieure audit second seuil, on déclenche une alarme.

Ce procédé s'applique aussi pour déterminer s'il y a un pneumatique manifestement sur-gonflé par rapport aux autres. Ce second test est utile pour détecter par exemple qu'une roue de secours a été mise en service sans que sa pression de gonflage soit ramenée à une valeur correcte.

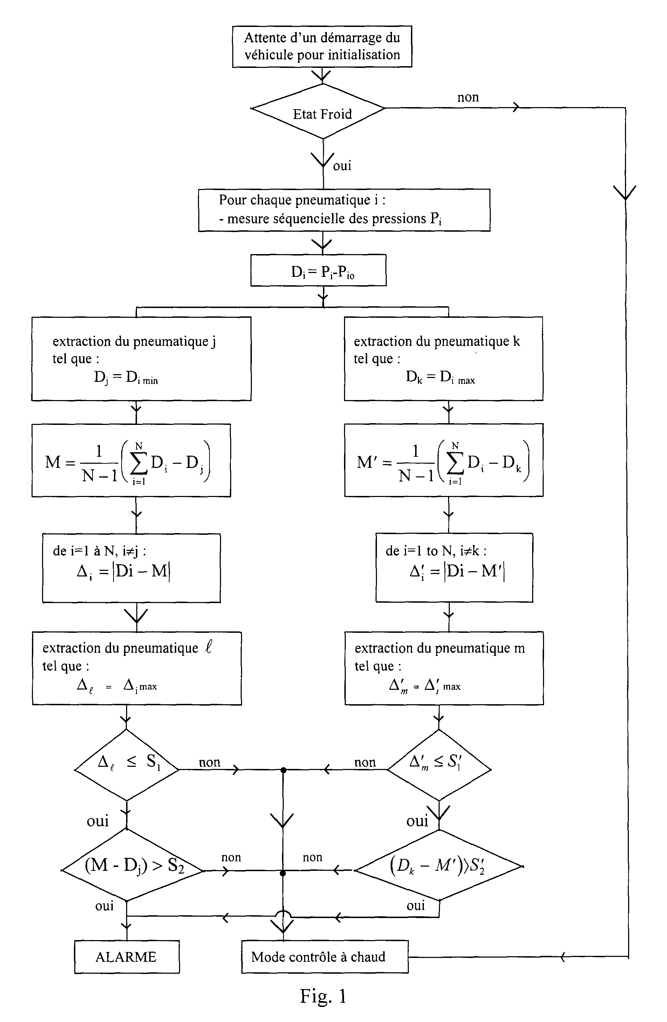

La suite de la description permet, avec l'illustration sous forme d'organigramme jointe (figure 1) de bien comprendre une mise en oeuvre de l'invention.

Pour mettre en oeuvre le procédé de l'invention, on peut utiliser un dispositif de surveillance tel que présenté dans le brevet US 4 703 650 avec un module électronique de mesure par roue transmettant par couplage inductif les signaux de mesure à une unité centrale disposée dans le véhicule et reliée elle-même à un dispositif d'affichage à proximité du conducteur. On peut aussi utiliser un dispositif transmettant par radio les mêmes informations à une unité centrale similaire. Les modules électroniques de roue mesurent au minimum la pression de gonflage du pneumatique auquel ils sont affectés. Ils peuvent aussi mesurer une estimation de la température de l'air interne du pneumatique.

Le procédé selon l'invention est prévu pour être mis en oeuvre de préférence à chaque démarrage du véhicule lorsque les pneumatiques sont froids, c'est-à-dire sont en équilibre thermique avec l'air environnant. La première étape est ainsi de détecter l'état chaud ou froid des pneumatiques. Ce contrôle peut se faire comme le propose le brevet FR 2 680 136 en comparant les écarts de températures mesurés entre les températures internes de chaque pneumatique et une mesure de température ambiante disponible dans le véhicule. Lorsque l'on ne dispose pas de ces mesures de températures, on peut aussi vérifier que le temps d'arrêt du véhicule a été supérieur à un temps minimum, de l'ordre de 90 mn en tourisme ou 4 heures en poids lourd. On peut aussi modifier ce temps de refroidissement en fonction de l'usage précédent du véhicule que l'on aurait mémorisé.

Si ce contrôle conclut à un état chaud des pneumatiques, on bascule immédiatement dans un mode de contrôle dit à chaud. Ce contrôle à chaud des pneumatiques comporte avantageusement des comparaisons des pressions de gonflage pneumatique par pneumatique relativement aux pressions nominales à froid, la surveillance des écarts entre les pneumatiques d'un même essieu ainsi que la surveillance de la variation dans le temps de ces écarts entre pneumatiques d'un même essieu ou de plusieurs essieux.

Si le contrôle initial conclut à l'état froid des pneumatiques, on mesure séquentiellement la pression de gonflage de chaque pneumatique puis on calcule l'écart entre les pressions de gonflage mesurées et les pressions nominales à froid.

On obtient ainsi :

$$D_i = P_i - P_{i0}$$

où $P_i$ est la pression de gonflage du pneumatique i et $P_{i0}$ est la pression nominale à froid du même pneumatique i. Il est à noter qu'il est tout à fait possible que les pressions nominales soient différentes entre plusieurs pneumatiques, notamment entre des pneumatiques équipant des essieux différents. En conséquence, on peut observer des cas où le pneumatique le moins gonflé est correctement gonflé alors qu'un autre pneumatique de pression de gonflage supérieure est sous-gonflé relativement à sa pression nominale.

On extrait ensuite de l'ensemble des valeurs $D_i$, la valeur minimale algébriquement qui correspond au pneumatique le plus sous-gonflé du véhicule. On appelle ce pneumatique le pneumatique j. On a :

$$D_j = D_{i\,min}.$$

On analyse ensuite la dispersion des écarts pour tous les autres pneumatiques. Cette analyse peut se faire en calculant la moyenne des écarts M :

$$M = \frac{1}{N-1}\left(\sum_{i=1}^{N} D_i - D_j\right)$$

où N est le nombre total de pneumatiques munis d'un dispositif de mesure de la pression et effectivement surveillés.

On calcule ensuite pour chaque pneumatique la différence $\Delta_i$ telle que :

$$\Delta_i = |Di\text{-}M|$$

et on compare la valeur maximale de $\Delta_i$ relativement à un premier seuil $S_1$. La valeur maximale de $\Delta_i$ est celle du pneumatique $\ell$ (différent du pneumatique j) dont la pression de gonflage est la plus écartée de la moyenne des écarts M.

Si cette valeur maximale $\Delta_\ell$ est inférieure au seuil $S_1$, cela veut dire que l'ensemble des autres pneumatiques du véhicule a des valeurs de pressions de gonflage homogènes, peu dispersées.

Au contraire, si cette valeur maximale est supérieure au seuil $S_1$, cela indique que les valeurs des pressions de gonflage des autres pneumatiques du véhicule sont trop dispersées pour que le test soit significatif et on bascule immédiatement dans le mode de contrôle à chaud, après avoir, éventuellement, averti le conducteur de cet état de choses.

Après avoir vérifié que les pressions sont peu dispersées, on compare alors la différence entre l'écart $D_j$ et la moyenne M relativement à un second seuil $S_2$ :

$$(M - D_j) > S_2.$$

Et si cette différence se révèle supérieure à ce seuil $S_2$, cela veut dire que le pneumatique j est significativement plus sous-gonflé que l'ensemble des autres pneumatiques du véhicule.

Cette situation est anormale car le véhicule, qu'on peut présumer être bien entretenu si l'on se réfère aux écarts déterminés pour tous les autres pneumatiques, a un pneumatique significativement sous-gonflé relativement aux autres. Il ne s'agit probablement pas d'une négligence du propriétaire du véhicule mais plutôt d'une anomalie sur le pneumatique considéré qui peut être due à une fuite très lente non encore détectée ou à une intervention qui n'a pas été suivie d'un contrôle correct de la pression de gonflage du pneumatique.

Il est donc souhaitable d'indiquer au conducteur que ce pneumatique j présente une anomalie potentielle de gonflage et de lui conseiller de le faire contrôler.

Typiquement, pour des véhicules poids lourd, avec des pressions nominales de gonflage de l'ordre de 8 bar, les valeurs habituelles de seuil critique d'alerte sont de l'ordre de 1 bar. Lorsque toutes les pressions sont supérieures à la pression nominale moins 1 bar, aucune alerte n'est usuellement transmise.

Dans le cas de ces véhicules poids lourd, on peut choisir pour le seuils $S_1$ une valeur de l'ordre de 400 mbar et pour le seuil $S_2$ une valeur de l'ordre de 800 mbar. Cela montre que ce test peut révéler une situation anormale de façon précoce dans le cas d'une fuite lente.

La figure 1 illustre aussi le test similaire concernant l'identification du pneumatique le plus sur-gonflé relativement aux autres. Cette identification est notamment intéressante pour détecter le cas où une roue de secours, normalement sur-gonflée, a été mise en service sans avoir sa pression de gonflage corrigée.

## Revendications

**1.** Procédé d'exploitation des signaux dans un système de surveillance des pneumatiques d'un véhicule, ledit système délivrant pour chaque pneumatique au moins une mesure de la pression de gonflage dudit pneumatique, dans lequel, après avoir vérifié l'état froid des pneumatiques :

- pour chaque pneumatique (*i*), on mesure la pression de gonflage ($P_i$) et on calcule l'écart ($D_i$) entre la pression de gonflage mesurée ($P_i$) et la pression nominale ($P_{i0}$) ;
- on identifie le pneumatique du véhicule dont ledit écart ($D_j$) a la valeur algébrique la plus petite et on appelle ce pneumatique (*j*) « le pneumatique le plus sous-gonflé » ;
- pour tous les pneumatiques du véhicule, à l'exception du pneumatique le plus sous-gonflé, on calcule une grandeur caractéristique de la dispersion ($\Delta_\ell$) desdits écarts ($D_i$) entre les pressions de gonflage ($P_i$) mesurées et les pressions nominales ($P_{i0}$) et on compare cette grandeur caractéristique ($\Delta_\ell$) relativement à un premier seuil ($S_1$) donné ;
- si la grandeur caractéristique de la dispersion ($\Delta_\ell$) desdits écarts ($D_i$) est inférieure au premier seuil ($S_1$), on calcule, pour le pneumatique le plus sous-gonflé (*j*), la différence entre ledit écart ($D_j$) entre la pression de gonflage mesurée ($P_j$) et la pression nominale ($P_{j0}$) dudit pneumatique (*j*) et la moyenne (M) desdits écarts des autres pneumatiques, et on compare ladite différence (M — $D_j$) relativement à un second seuil ($S_2$) donné ;
- si ladite différence (M — $D_j$) est supérieure audit second seuil ($S_2$), on déclenche une alarme.

2. Procédé d'exploitation des signaux dans un système de surveillance des pneumatiques d'un véhicule, ledit système délivrant pour chaque pneumatique au moins une mesure de la pression de gonflage dudit pneumatique, dans lequel, après avoir vérifié l'état froid des pneumatiques :

- pour chaque pneumatique (*i*), on mesure la pression de gonflage ($P_i$) et on calcule l'écart (D;) entre la pression de gonflage mesurée ($P_i$) et la pression nominale ($P_{i0}$) ;
- on identifie le pneumatique du véhicule dont ledit écart ($D_k$) a la valeur algébrique la plus élevée et on appelle ce pneumatique (*k*) « le pneumatique le plus sur-gonflé » ;
- pour tous les pneumatiques du véhicule, à l'exception du pneumatique le plus sur-gonflé, on calcule une grandeur caractéristique de la dispersion ($\Delta'_m$) desdits écarts ($D_i$) entre les pressions de gonflage mesurées ($P_i$) et les pressions nominales ($P_{i0}$) et on compare cette grandeur caractéristique ($\Delta'_m$) relativement à un premier seuil ($S'_1$) donné ;
- si la grandeur caractéristique de la dispersion ($\Delta'_m$) desdits écarts ($D_i$) est inférieure au premier seuil ($S'_1$), on calcule, pour le pneumatique le plus sur-gonflé (*k*), la différence entre la moyenne (M) desdits écarts des autres pneumatiques et ledit écart ($D_k$) entre la pression de gonflage mesurée ($P_k$) et la pression nominale ($P_{k0}$) dudit pneumatique, et on compare ladite différence ($D_k$ — M) relativement à un second seuil ($S'_2$) donné ;
- si ladite différence ($D_k$ — M) est supérieure audit second seuil ($S'_2$), on déclenche une alarme.

3. Procédé selon l'une des revendications 1 ou 2, dans lequel, en considérant tous les pneumatiques à l'exception du pneumatique le plus sous-gonflé ou le plus sur-gonflé, pour calculer ladite grandeur caractéristique ($\Delta_\ell$, $\Delta'_m$) de la dispersion desdits écarts ($D_i$) :

- on calcule la moyenne algébrique (M, M') des écarts ($D_i$) entre les pressions de gonflage ($P_i$) et les pressions nominales ($P_{i0}$) ;
- pour chaque pneumatique, on calcule la différence (M — $D_j$, M' — $D_k$) entre l'écart ($D_j$, $D_k$) entre la pression de gonflage et la pression nominale dudit pneumatique et ladite moyenne algébrique (M) ;
- on prend comme grandeur caractéristique ($\Delta_\ell$, $\Delta'_m$) de la dispersion desdits écarts, ladite différence dont la valeur absolue est maximale.

4. Procédé selon l'une des revendications 1 à 3, dans lequel à la fin du contrôle à froid, on bascule dans un mode de contrôle à chaud.

**Claims**

1. A method of processing signals in a system for monitoring the tyres of a vehicle, said system delivering for each tyre at least one measurement of the inflation pressure of said tyre, in which, after having verified the cold state of the tyres:

- for each tyre (*i*), the inflation pressure ($P_i$) is measured and the deviation ($D_i$) between the measured inflation pressure ($P_i$) and the nominal pressure ($P_{i0}$) is calculated;

- the tyre of the vehicle, said deviation ($D_j$) of which has the lowest algebraic value, is identified and this tyre (*j*) is called "the most under-inflated tyre",

- for all the tyres of the vehicle, with the exception of the most under-inflated tyre, a characteristic value of the dispersion ($\Delta_\ell$) of said deviations ($D_i$) between the measured inflation pressures ($P_i$) and the nominal pressures ($P_{i0}$) is calculat-

ed and this characteristic value ($\Delta_\ell$) is compared with a first given threshold ($S_1$);

- if the characteristic value of the dispersion ($\Delta_\ell$) of said deviations ($D_i$) is less than the first threshold ($S_1$), there is calculated, for the most under-inflated tyre ($j$), the difference between said deviation ($D_j$) between the measured inflation pressure ($P_j$) and the nominal pressure ($P_{j0}$) of said tyre ($j$) and the average ($M$) of said deviations of the other tyres and said difference ($M - D_j$) is compared with a second given threshold ($S_2$);

- if said difference ($M - D_j$) is greater than said second threshold ($S_2$), an alarm is sounded.

2. A method of processing signals in a system for monitoring the tyres of a vehicle, said system delivering for each tyre at least one measurement of the inflation pressure of said tyre, in which, after having verified the cold state of the tyres:

- for each tyre ($i$), the inflation pressure ($P_i$) is measured and the deviation ($D_i$) between the measured inflation pressure ($P_i$) and the nominal pressure ($P_{i0}$) is calculated;

- the tyre of the vehicle, said deviation ($D_k$) of which has the highest algebraic value, is identified and this tyre ($k$) is called "the most over-inflated tyre";

- for all the tyres of the vehicle, with the exception of the most over-inflated tyre, a characteristic value of the dispersion ($\Delta'_m$) of said deviations ($D_i$)between the measured inflation pressures ($P_i$) and the nominal pressures ($P_{i0}$) is calculated and this characteristic value ($\Delta'_m$) is compared with a first given threshold ($S'_1$);

- if the characteristic value of the dispersion ($\Delta'_m$) of said deviations ($D_i$) is less than the first threshold ($S'_1$), there is calculated, for the most over-inflated tyre ($k$), the difference between the average ($M$) of said deviations of the other tyres and said deviation ($D_k$) between the measured inflation pressure ($P_k$) and the nominal pressure ($P_{k0}$) of said tyre, and said difference ($D_k - M$) is compared with a second given threshold ($S'_2$);

- if said difference ($D_k - M$) is greater than said second threshold ($S'_2$), an alarm is sounded.

3. A method according to either of Claims 1 and 2, in which, considering all the tyres with the exception of the most under-inflated or most over-inflated tyre, to calculate said characteristic value ($\Delta_\ell$, $\Delta'_m$) of the dispersion of said deviations ($D_i$):

- the algebraic average ($M$, $M'$) of the deviations ($D_i$) between the inflation pressures ($P_i$) and the nominal pressures ($P_{i0}$) is calculated;

- for each tyre, the difference ($M - D_j$, $M' - D_k$) between the deviation ($D_j$, $D_k$) between the inflation pressure and the nominal pressure of said tyre and said algebraic average ($M$) is calculated;

- said difference, the absolute value of which is maximum, is taken as characteristic value ($\Delta_\ell$, $\Delta'_m$) of the dispersion of said deviations.

4. A method according to one of Claims 1 to 3, in which a hot monitoring mode is switched to at the end of the cold monitoring.

**Patentansprüche**

1. Verfahren zur Verwertung der Signale in einem System zur Überwachung der Reifen eines Fahrzeugs, wobei das genannte System für jeden Reifen mindestens eine Messung des Aufpumpdrucks des genannten Reifens liefert, worin, nachdem man sich vom kalten Zustand der Reifen vergewissert hat,

- man für jeden Reifen ($i$) den Aufpumpdruck ($P_i$) mißt und die Abweichung ($D_i$) zwischen dem gemessenen Aufpumpdruck ($P_i$) und dem Nenndruck ($P_{i0}$) berechnet;
- man den Reifen des Fahrzeugs identifiziert, bei dem die genannte Abweichung ($D_j$) den geringsten algebraischen Wert hat, und man diesen Reifen ($j$) den "am meisten unter-aufgepumpten Reifen" nennt;
- man für alle Reifen des Fahrzeugs, mit Ausnahme des am meisten unter-aufgepumpten Reifens, eine charakteristische Größe der Streuung ($\Delta_l$) der genannten Abweichungen ($D_i$) zwischen den gemessenen Aufpumpdrücken ($P_i$) und den Nenndrücken ($P_{i0}$) berechnet und man diese charakteristische Größe ($\Delta_l$) bezüglich einem ersten, gegebenen Schwellenwert ($S_1$) vergleicht;
- man, wenn die charakteristische Größe der Streuung ($\Delta_l$) der genannten Abweichungen ($D_i$) kleiner ist als der erste Schwellenwert ($S_1$), für den am meisten unter-aufgepumpten Reifen ($j$) die Differenz zwischen der genannten Abweichung ($D_j$) zwischen dem gemessenen Aufpumpdruck ($P_j$) und dem Nenndruck ($P_{j0}$) des genannten Reifens ($j$) und dem Mittelwert (M) der genannten Abweichungen der anderen Reifen berechnet und man die genannte Differenz (M-D$_j$) bezüglich einem zweiten, gegebenen Schwellenwert (S$_2$) vergleicht; und

- man, wenn die genannte Differenz (M-D$_j$) größer ist als der genannte zweite Schwellenwert (S$_2$), einen Alarm auslöst.

2. Verfahren zur Verwertung der Signale in einem System zur Überwachung der Reifen eines Fahrzeugs, wobei das genannte System für jeden Reifen mindestens eine Messung des Aufpumpdrucks des genannten Reifens liefert, worin, nachdem man sich vom kalten Zustand der Reifen vergewissert hat,

- man für jeden Reifen ($i$) den Aufpumpdruck (P$_i$) mißt und die Abweichung (D$_i$) zwischen dem gemessenen Aufpumpdruck (P$_i$) und dem Nenndruck (P$_{i0}$) berechnet;

- man den Reifen des Fahrzeugs identifiziert, bei dem die genannte Abweichung (D$_k$) den höchsten algebraischen Wert hat, und man diesen Reifen ($k$) den "am meisten über-aufgepumpten Reifen" nennt;

- man für alle Reifen des Fahrzeugs, mit Ausnahme des am meisten über-aufgepumpten Reifens, eine charakteristische Größe der Streuung (Δ'$_m$) der genannten Abweichungen (D$_i$) zwischen den gemessenen Aufpumpdrücken (P$_i$) und den Nenndrücken (P$_{i0}$) berechnet und man diese charakteristische Größe (Δ'$_m$) bezüglich einem ersten, gegebenen Schwellenwert (S'$_1$) vergleicht;

- man, wenn die charakteristische Größe der Streuung (Δ'$_m$) der genannten Abweichungen (D$_i$) kleiner ist als der erste Schwellenwert (S'$_1$), für den am meisten über-aufgepumpten Reifen ($k$) die Differenz zwischen dem Mittelwert (M) der genannten Abweichungen der anderen Reifen und der genannten Abweichung (D$_k$) zwischen dem gemessenen Aufpumpdruck (P$_k$) und dem Nenndruck (P$_{k0}$) des genannten Reifens berechnet und man die genannte Differenz (D$_k$-M) bezüglich einem zweiten, gegebenen Schwellenwert (S'$_2$) vergleicht; und

- man, wenn die genannte Differenz (D$_k$-M) größer ist als der genannte zweite Schwellenwert (S'$_2$), einen Alarm auslöst.

3. Verfahren nach einem der Ansprüche 1 oder 2, worin, indem man alle Reifen in Betracht zieht, mit Ausnahme des am meisten unter-aufgepumpten oder am meisten über-aufgepumpten Reifens, um die genannte, charakteristische Größe (Δ$_l$ , Δ'$_m$) der Streuung der genannten Abweichungen (D$_i$) zu berechnen,

- man den algebraischen Mittelwert (M, M') der Abweichungen (D$_i$) zwischen den Aufpumpdrücken (P$_i$) und den Nenndrücken (P$_{i0}$) berechnet;

- man für jeden Reifen die Differenz (M-D$_j$, M'-D$_k$) zwischen der Abweichung (D$_j$, D$_k$) zwischen dem Aufpumpdruck und dem Nenndruck und dem genannten, algebraischen Mittelwert (M) berechnet; und

- man als charakteristische Größe (Δ$_l$ , Δ'$_m$) der Streuung der genannten Abweichungen die genannte Differenz heranzieht, deren Absolutwert maximal ist.

4. Verfahren nach einem der Ansprüche 1 bis 3, worin man am Ende der Kaltüberwachung auf eine Warm-Überwachungsweise übergeht.

EP 0 796 748 B1

Attente d'un démarrage du
véhicule pour initialisation

Etat Froid — non →

oui

Pour chaque pneumatique i :
- mesure séquencielle des pressions $P_i$

$D_i = P_i - P_{io}$

extraction du pneumatique j
tel que :
$$D_j = D_{i\,min}$$

$$M = \frac{1}{N-1}\left(\sum_{i=1}^{N} D_i - D_j\right)$$

de i=1 à N, i≠j :
$$\Delta_i = |Di - M|$$

extraction du pneumatique $\ell$
tel que :
$$\Delta_\ell = \Delta_{i\,max}$$

$\Delta_\ell \leq S_1$ — non →

oui

$(M - D_j) > S_2$ — non →

oui

extraction du pneumatique k
tel que :
$$D_k = D_{i\,max}$$

$$M' = \frac{1}{N-1}\left(\sum_{i=1}^{N} D_i - D_k\right)$$

de i=1 to N, i≠k :
$$\Delta'_i = |Di - M'|$$

extraction du pneumatique m
tel que :
$$\Delta'_m = \Delta'_{i\,max}$$

← non — $\Delta'_m \leq S'_1$

oui

non — $(D_k - M') \rangle S'_2$

oui

ALARME

Mode contrôle à chaud

Fig. 1

7